# EUROPÄISCHE PATENTSCHRIFT

(11) **EP 3 923 107 B1**
(45) Veröffentlichungstag und Bekanntmachung des Hinweises auf die Patenterteilung: **06.08.2025**
(21) Anmeldenummer: 21178103.4
(22) Anmeldetag: 07.06.2021
(51) Int. Cl.: G05D 1/00

(54) **KONTROLLZENTRUM, FAHRZEUG, VERFAHREN, VORRICHTUNG UND COMPUTERPROGRAMM ZUR ÜBERNAHME DER KONTROLLE ÜBER EIN ZU KONTROLLIERENDES FAHRZEUG**
CONTROL CENTRE, VEHICLE, METHOD, DEVICE AND COMPUTER PROGRAM FOR TAKING OVER CONTROL OF A VEHICLE TO BE CONTROLLED
CENTRE DE CONTRÔLE, VÉHICULE, PROCÉDÉ, DISPOSITIF ET PROGRAMME INFORMATIQUE PERMETTANT DE PRENDRE LE CONTRÔLE D'UN VÉHICULE À CONTRÔLER

(30) Priorität: 10.06.2020 DE 102020207283
(43) Veröffentlichungstag der Anmeldung: 15.12.2021
(73) Patentinhaber: Volkswagen Aktiengesellschaft, 38440 Wolfsburg (DE)
(72) Erfinder: El Assaad, Ahmad, 38448 Wolfsburg (DE); Kwoczek, Andreas, 38165 Lehre (DE); Kwasny, Julia, 38448 Wolfsburg (DE)
(74) Vertreter: 2SPL Patentanwälte PartG mbB

(56) Entgegenhaltungen:
- WO-A1-2020/014090
- DE-A1- 102018 114 808
- US-A1- 2013 030 606
- NARBAYEVA SALTANAT ET AL: "Blockchain Technology on the Way of Autonomous Vehicles Development", TRANSPORTATION RESEARCH PROCEDIA, vol. 44, 20 March 2020 (2020-03-20), pages 168 - 175, XP093144020, ISSN: 2352-1465, Retrieved from the Internet <URL:https://pdf.sciencedirectassets.com/308315/1-s2.0-S2352146520X00032/1-s2.0-S2352146520300740/main.pdf?X-Amz-Security-Token=IQoJb3JpZ2luX2VjEBIaCXVzLWVhc3QtMSJHMEUCIDCr0bRFbghjUW2f314H8DxqCe4V79qjHV3tXgDcbBBLAiEAjpetECH3xMnxCd4WY54zn0Yfj32fgHTxaPLNHCPT8AgqswUIKxAFGgwwNTkwMDM1NDY4NjUiDOY3JPH2b/DDsjOOu> DOI: 10.1016/j.trpro.2020.02.024
- JIANG TIGANG ET AL: "Blockchain-Based Internet of Vehicles: Distributed Network Architecture and Performance Analysis", IEEE INTERNET OF THINGS JOURNAL, IEEE, USA, vol. 6, no. 3, 1 June 2019 (2019-06-01), pages 4640 - 4649, XP011731266, DOI: 10.1109/JIOT.2018.2874398
- ANONYMOUS: "Blockchain Technologies in the Automotive Industry", 18 April 2019 (2019-04-18), XP093144937, Retrieved from the Internet <URL:https://www.e-zigurat.com/en/blog/blockchain-automotive-industry/> [retrieved on 20240325]

## Beschreibung

Die vorliegende Erfindung bezieht sich auf ein Verfahren, ein Computerprogramm, ein Fahrzeug, ein Kontrollzentrum, und eine Vorrichtung zur Koordination einer Übernahme der Kontrolle über ein zu kontrollierendes Fahrzeug, insbesondere aber nicht ausschließlich, auf ein Konzept zur Kontrollübernahme über ein Fahrzeug durch Halten des zu kontrollierenden Fahrzeugs in einem dynamischen Aufenthaltsbereich relativ zu einem führenden oder kontrollierenden Fahrzeug.

Es ist absehbar, dass es zukünftig mehr und mehr autonom fahrende Fahrzeuge im Straßenverkehr geben wird. Autonom fahrende Fahrzeuge können ganz ohne Fahrer unterwegs sein, der das Fahrzeug auf Anweisung von Polizei, Feuerwehr etc. aus bestimmten Bereichen rausfahren könnte. Abschleppdienste sind auch nicht immer verfügbar, aufwendig und teuer. Daneben gibt es Situationen, in denen bestimmte Bereiche geräumt werden müssen, z.B. bei Staatsbesuchen, für Veranstaltungen etc. Auch bei extremen Situationen, wie bei der Identifikation von Kriminellen in einem autonomen Fahrzeug, muss das autonome Fahrzeug von einem (autonomen) Polizei-Auto zur nächsten Untersuchungsstation geführt werden können. Auch wenn im Rahmen hoheitlicher Aufgaben Fahrzeuge aus dem fließenden Verkehr gezogen werden sollen, müssen Möglichkeiten geschaffen werden dies zu tun.

Das Dokument DE 10 2015 225 729 A1 betrifft ein Verfahren zum Identifizieren eines autonomen Kraftfahrzeugs, bei dem von einer Einheit eine Anfrage bezüglich des Kraftfahrzeugs zu einem Trustcenter gesendet wird, wobei die Anfrage eine Kennzeichnung des Kraftfahrzeugs und eine Kennzeichnung der Einheit umfasst, und die Einheit nach Überprüfung der Kennzeichnungen durch das Trustcenter eine Freigabeanforderung erhält.

Die Druckschrift DE 10 2018 110 570 A1 beschreibt ein Verfahren zum gezielten Übermitteln einer Anweisung von einer Vorgabeinstanz an ein Zielfahrzeug, wobei eine Übermittlung durch Aussenden einer elektronischen Broad-Cast-Nachricht mittels einer Sendeeinheit der Vorgabeinstanz und Empfangen der elektronischen Broad-Cast-Nachricht mittels Empfangseinheiten von Fahrzeugen im Umfeld der Vorgabeinstanz erfolgt.

Die Druckschrift DE 10 2019 101 790 A1 lehrt ein System und ein Verfahren zum Bilden einer Flotte und zum Positionieren von Fahrzeugen in der Flotte.

Die Druckschrift DE 10 2016 002 127 A1 lehrt ein Kraftfahrzeug zur Einbeziehung in einen Fahrzeugverband, bei dem die relativen seitlichen Fahrzeugpositionen verstellbar sind, und entsprechendes Verfahren.

WO 2020/014090 A1 lehrt ein Verfahren und eine Vorrichtung zum automatisierten Verfolgen eines vorausfahrenden Fahrzeugs. Das Führungsfahrzeug navigiert einen Weg von einem Startpunkt zu einem Ziel. Das führende Fahrzeug und das nachfolgende Fahrzeug sind über eine V2V-Kommunikation verbunden.

US 2013/030606 A1 lehrt ein Verfahren zum autonomen Begleiten von Fahrzeugen, die entlang einer Route fahren, wobei ein Leitfahrzeug mit mindestens einem Folgefahrzeug in Kommunikation steht. Das mindestens eine Folgefahrzeug empfängt eine Mitteilung bezüglich einer Zielversatzposition und Streckendaten.

DE 10 2018 114808 A1 lehrt ein Verfahren zur automatischen Querführung eines Folgefahrzeugs in einem Fahrzeug-Platoon. Das Verfahren weist ein Bestimmen und Empfangen von mehreren Spurdaten auf.

Bei diesen Konzepten fällt auf, dass bei der Kontrollübernahme starre Vorgaben gemacht werden, z.B. das einem Fahrzeug eine feste Trajektorie oder ein definiertes Ziel vorgegeben wird. Dies kann jedoch aufgrund der Dynamik des Verkehrsgeschehens ungünstig sein, beispielsweise wenn sich die Verkehrsdichte entlang der Trajektorie ändert oder unvorhersehbare Ereignisse wie Unfälle auftreten.

Es besteht daher ein Bedarf daran, ein verbessertes Konzept zur Übernahme einer Kontrolle über ein zu kontrollierendes Fahrzeug zu schaffen. Diesen Bedarf tragen die Gegenstände der anhängigen unabhängigen Ansprüche Rechnung.

Ausführungsbeispiele basieren auf dem Kerngedanken, dass einem zu kontrollierenden Fahrzeug zur Übernahme der Kontrolle ein Aufenthaltsbereich relativ zu einem führenden Fahrzeug zugewiesen werden kann. Innerhalb des Aufenthaltsbereiches kann sich das zu kontrollierende Fahrzeug dann autonom bewegen, d.h. Brems- und Lenkmanöver durchführen und in Ausnahmesituationen bzw. Notfällen, den Aufenthaltsbereich auch verlassen. Dies hat den Vorteil, dass zum Zeitpunkt der Kontrollübernahme noch keine starre Vorgabe hinsichtlich des weiteren Fahrtverlaufs gemacht werden muss, beispielsweise muss zum Zeitpunkt der Kontrollübernahme noch keine starre Trajektorie oder eine Zielposition kommuniziert werden, sondern diese ergibt sich erst im Verlauf der kontrollierten Fahrt.

Ausführungsbeispiele schaffen ein Verfahren für ein führendes Fahrzeug und zur Übernahme der Kontrolle über ein zu kontrollierendes Fahrzeug. Das Verfahren umfasst ein Identifizieren des zu kontrollierenden Fahrzeugs und ein Bestimmen eines dynamischen Aufenthaltsbereiches relativ zu dem führenden Fahrzeug für das zu kontrollierende Fahrzeug. Das Verfahren umfasst ferner ein Senden einer Nachricht über den dynamischen Aufenthaltsbereich an das zu kontrollierende Fahrzeug. Das zu kontrollierende Fahrzeug kann über den dynamischen Aufenthaltsbereich entsprechend kontrolliert werden.

Der dynamische Aufenthaltsbereich umfasst einen Korridor hinter dem führenden Fahrzeug für das zu kontrollierende Fahrzeug. Durch den Korridor kann ein Spielraum für das kontrollierte Fahrzeug vorgegeben werden, innerhalb dessen es sich an ein aktuelles Verkehrsgeschehen anpassen kann.

In weiteren Ausführungsbeispielen kann das Verfahren ferner ein Senden einer Information über die Übernahme der Kontrolle an ein Kontrollzentrum und ein Erhalten einer Bestätigung über die Kontrollübernahme von dem Kontrollzentrum umfassen. Die Kommunikation über ein Kontrollzentrum und die Bestätigung durch das Kontrollzentrum können zu einer sichereren Kontrollübernahme beitragen. Unautorisierten Kontrollübernahmen kann vorgebeugt werden.

Der dynamische Aufenthaltsbereich hängt von der Geschwindigkeit des führenden Fahrzeugs und einer Verkehrssituation ab . In Ausführungsbeispielen kann so eine Verkehrssicherheit und ein sicherer Verkehrsfluss gewährleistet werden.

Darüber hinaus erfolgt ein Dokumentieren der Kontrollübernahme in dem führenden Fahrzeug. Ausführungsbeispiele können so eine Nachverfolgung und Überprüfbarkeit von Kontrollübernahmen ermöglichen.

Ausführungsbeispiele schaffen darüber hinaus ein Verfahren für ein zu kontrollierendes Fahrzeug und zur Übernahme einer Kontrolle durch ein führendes Fahrzeug. Das Verfahren umfasst ein Empfangen einer Nachricht über einen dynamischen Aufenthaltsbereich von dem führenden Fahrzeug und ein Steuern des zu kontrollierenden Fahrzeugs zum Verbleib in dem dynamischen Aufenthaltsbereich relativ zu dem führenden Fahrzeug. Ausführungsbeispiele können so eine verkehrsgerechte Kontrollübernahme ermöglichen.

In einigen Ausführungsbeispielen kann das Verfahren ferner ein Erhalten einer Autorisierung von einem Kontrollzentrum über die Übernahme der Kontrolle vor dem Steuern des zu kontrollierenden Fahrzeugs umfassen. Unautorisierte Kontrollübernahmen können so reduziert oder vermieden werden.

Das Steuern des zu kontrollierenden Fahrzeugs zum Verbleib in dem dynamischen Aufenthaltsbereich relativ zu dem führenden Fahrzeug kann ferner basierend auf erhaltener Verkehrsinformation erfolgen. Eine besondere Verkehrssituation, wie beispielsweise ein Unfall oder ein riskantes Manöver eines anderen Verkehrsteilnehmers, kann dabei ein Steuern aus dem Aufenthaltsbereich heraus bedingen. Eine Sicherheit im Verkehrsablauf kann so trotz Kontrollübernahme aufrechterhalten werden.

Das Verfahren kann auch ein Übernehmen der Kontrolle über ein dem zu kontrollierenden Fahrzeug nachfolgendes Fahrzeug umfassen. Damit lassen sich zumindest in manchen Ausführungsbeispielen Verbände oder Ketten von Fahrzeugen bilden.

Weiter erfolgt ein Dokumentieren der Kontrollübernahme in dem zu kontrollierenden Fahrzeug. Ausführungsbeispiele können so eine Nachverfolgung und Überprüfbarkeit von Kontrollübernahmen ermöglichen.

Nicht beansprucht und lediglich zum besseren Verständnis der Anmeldung ist noch ein Verfahren für ein Kontrollzentrum zur Überwachung einer Kontrollübernahme eines zu kontrollierenden Fahrzeugs durch ein führendes Fahrzeug beschrieben. Das Verfahren umfasst ein Empfangen einer Nachricht über einen dynamischen Aufenthaltsbereich von dem führenden Fahrzeug und ein Verifizieren einer Autorisierung des führenden Fahrzeugs. Das Verfahren umfasst darüber hinaus ein Senden einer Autorisierung der Kontrollübernahme an das zu kontrollierende Fahrzeug. Unautorisierte Kontrollübernahmen von Fahrzeugen können so reduziert oder vermieden werden.
dem Aufenthaltsbereich heraus bedingen. Eine Sicherheit im Verkehrsablauf kann so trotz Kontrollübernahme aufrechterhalten werden.

Das Verfahren kann auch ein Übernehmen der Kontrolle über ein dem zu kontrollierenden Fahrzeug nachfolgendes Fahrzeug umfassen. Damit lassen sich zumindest in manchen Ausführungsbeispielen Verbände oder Ketten von Fahrzeugen bilden.

In manchen Ausführungsbeispielen kann auch ein Dokumentieren der Kontrollübernahme in dem zu kontrollierenden Fahrzeug erfolgen. Ausführungsbeispiele können so eine Nachverfolgung und Überprüfbarkeit von Kontrollübernahmen ermöglichen.

Ausführungsbeispiele schaffen darüber hinaus ein Verfahren für ein Kontrollzentrum zur Überwachung einer Kontrollübernahme eines zu kontrollierenden Fahrzeugs durch ein führendes Fahrzeug. Das Verfahren umfasst ein Empfangen einer Nachricht über einen dynamischen Aufenthaltsbereich von dem führenden Fahrzeug und ein Verifizieren einer Autorisierung des führenden Fahrzeugs. Das Verfahren umfasst darüber hinaus ein Senden einer Autorisierung der Kontrollübernahme an das zu kontrollierende Fahrzeug. Unautorisierte Kontrollübernahmen von Fahrzeugen können so reduziert oder vermieden werden.

Weiter erfolgt ein Dokumentieren der Kontrollübernahme durch das Kontrollzentrum.

Ausführungsbeispiele können so eine Nachverfolgung und Überprüfbarkeit von Kontrollübernahmen ermöglichen.

Ein weiteres Ausführungsbeispiel ist ein Computerprogramm zur Durchführung eines hierin beschriebenen Verfahrens, wenn das Computerprogramm auf einem Computer, einem Prozessor, einem Kontrollmodul oder einer programmierbaren Hardwarekomponente abläuft.

Eine Vorrichtung zur Übernahme, Überwachung, oder Koordination einer Übernahme einer Kontrolle eines zu kontrollierenden Fahrzeugs durch ein führendes Fahrzeug ist ein weiteres Ausführungsbeispiel. Die Vorrichtung umfasst zumindest eine Schnittstelle zur Kommunikation und ein Kontrollmodul zur Durchführung eines der hierin beschrieben Verfahren. Ein Fahrzeug oder ein Kontrollzentrum mit einer solchen Vorrichtung sind weitere Ausführungsbeispiele.

Weitere vorteilhafte Ausführungsbeispiele werden nachfolgend anhand der in den Zeichnungen dargestellten Ausführungsbeispiele, auf welche Ausführungsbeispiele generell jedoch nicht beschränkt sind, näher beschrieben. Es zeigen:
Fig. 1 ein Blockschaltbild eines Ablaufdiagramms eines Ausführungsbeispiels eines Verfahrens für ein führendes Fahrzeug und zur Übernahme der Kontrolle über ein zu kontrollierendes Fahrzeug;
Fig. 2 ein Blockschaltbild eines Ablaufdiagramms eines Ausführungsbeispiels eines Verfahrens für ein zu kontrollierendes Fahrzeug und zur Übernahme einer Kontrolle durch ein führendes Fahrzeug;
Fig. 3 ein Blockschaltbild eines Ablaufdiagramms eines Ausführungsbeispiels eines Verfahrens für ein Kontrollzentrum zur Überwachung einer Kontrollübernahme eines zu kontrollierenden Fahrzeugs durch ein führendes Fahrzeug;
Fig. 4 ein Blockschaltbild eines Ausführungsbeispiels eines führenden Fahrzeuges, eines Ausführungsbeispiels eines zu kontrollierenden Fahrzeuges, eines Ausführungsbeispiels eines Kontrollzentrums und eines Ausführungsbeispiels einer Vorrichtung zur Koordination einer Übernahme einer Kontrolle eines zu kontrollierenden Fahrzeugs durch ein führendes Fahrzeug; und
Fig. 5 ein Szenario einer Kontrollübernahme in einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. Optionale Merkmale oder Komponenten sind dabei in gestrichelten Linien dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

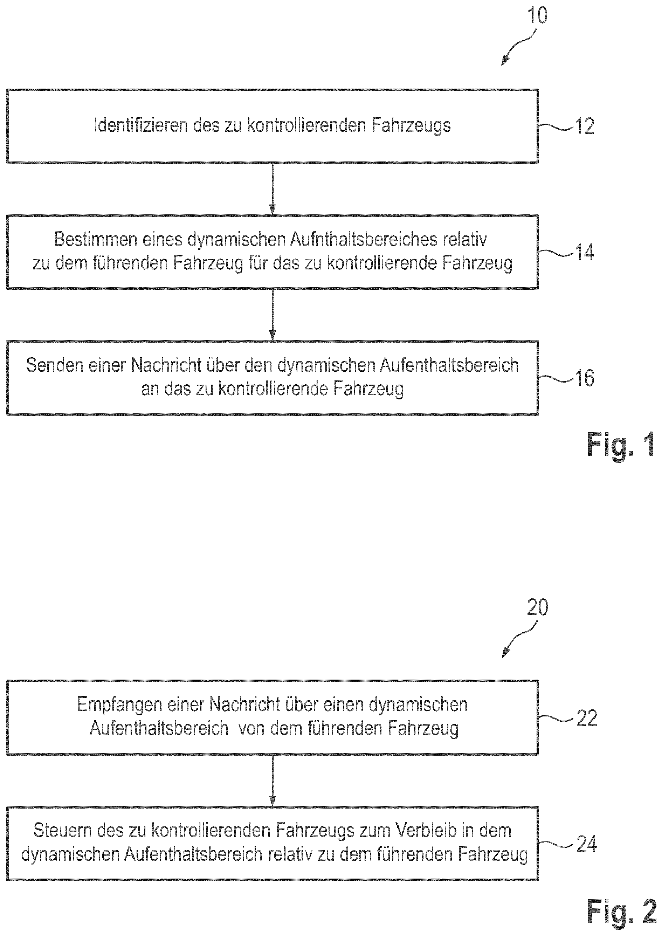

Fig. 1 zeigt ein Blockschaltbild eines Ablaufdiagramms eines Ausführungsbeispiels eines Verfahrens 10 für ein führendes Fahrzeug und zur Übernahme der Kontrolle über ein zu kontrollierendes Fahrzeug. Das Verfahren 10 umfasst ein Identifizieren 12 des zu kontrollierenden Fahrzeugs und ein Bestimmen 14 eines dynamischen Aufenthaltsbereiches relativ zu dem führenden Fahrzeug für das zu kontrollierende Fahrzeug. Das Verfahren 10 umfasst darüber hinaus ein Senden 16 einer Nachricht über den dynamischen Aufenthaltsbereich an das zu kontrollierende Fahrzeug.

Die Fahrzeuge können dabei jedwede Fahrzeuge sein, beispielsweise Personenkraftwagen, Lastkraftwagen, Transportfahrzeuge, usw. Das führende Fahrzeug kann z.B. ein Behördenfahrzeug wie ein Polizeiauto sein, denkbar ist aber auch ein Fahrzeug, das mit anderen Fahrzeugen eine Kolonne, einen Verband, eine Fahrzeugkette oder ein Platoon bilden möchte. Das zu kontrollierende Fahrzeug kann dabei ein beliebiger anderer Verkehrsteilnehmer sein, beispielsweise durch einen menschlichen Fahrer kontrolliert (direkt oder per Teleoperation) oder auch autonom fahrend, beispielsweise auch ganz ohne Fahrer. Das zu kontrollierende Fahrzeug ist zum Empfang der Nachricht ausgebildet, d.h. es sind entsprechende Komponenten zum Nachrichtenempfang vorhanden. Der dynamische Aufenthaltsbereich ist ein Bereich, der relativ zu dem führenden Fahrzeug definiert ist, beispielsweise ein Bereich hinter dem Fahrzeug. Dieser Bereich kann daher dynamisch mit dem führenden Fahrzeug mit wandern. Darüber hinaus kann dieser Bereich auch seine Größe und Gestalt ändern, z.B. um dem kontrollierten Fahrzeug zu ermöglichen, einen angemessenen Sicherheitsabstand zu halten oder eine andere Spur zu benutzen. Der dynamische Aufenthaltsbereich erlaubt dem kontrollierten Fahrzeug daher eine gewisse Freiheit, aber hält dies dennoch unter Kontrolle des führenden Fahrzeugs. Beispielsweise bildet der dynamische Aufenthaltsbereich einen Korridor hinter dem führenden Fahrzeug für das zu kontrollierende Fahrzeug. Der dynamische Aufenthaltsbereich kann dabei von der Geschwindigkeit des führenden Fahrzeugs und der Verkehrssituation abhängen. Das Identifizieren 12 des zu kontrollierenden Fahrzeugs kann dabei ein Ermitteln einer Kennung, beispielsweise anhand eines Kennzeichens oder einer Funkkennung, der zu kontrollierenden Fahrzeugs umfassen.

Fig. 2 illustriert ein Blockschaltbild eines Ablaufdiagramms eines Ausführungsbeispiels eines Verfahrens 20 für ein zu kontrollierendes Fahrzeug und zur Übernahme einer Kontrolle durch ein führendes Fahrzeug. Das Verfahren 20 umfasst ein Empfangen 22 einer Nachricht über einen dynamischen Aufenthaltsbereich von dem führenden Fahrzeug und ein Steuern 24 des zu kontrollierenden Fahrzeugs zum Verbleib in dem dynamischen Aufenthaltsbereich relativ zu dem führenden Fahrzeug. Das Steuern 24 kann dabei durch verschiedene möglich Instanzen erfolgen. Beispielsweise erhält ein Fahrer des zu kontrollierenden Fahrzeugs die Nachricht und Information über den Aufenthaltsbereich. Er steuert das Fahrzeug fortan derart, dass es in dem Aufenthaltsbereich verbleibt. Der Fahrer kann tatsächlich in dem Fahrzeug sein oder aber auch in einem Teleoperationszentrum zur Fernsteuerung des Fahrzeugs. Andere Varianten umfassen die autonome oder teilautonome Steuerung des kontrollierten Fahrzeugs, sodass dieses in dem Aufenthaltsbereich verbleibt.

Um Missbrauch vorzubeugen und einen autorisierten Ablauf zu gewährleisten kann zumindest in manchen Ausführungsbeispielen ein Kontrollzentrum involviert sein. Das Kontrollzentrum bildet dann eine Art Überwachungszentrale, gegenüber der sich das führende Fahrzeug vor Kontrollübernahme autorisiert. Das Verfahren 10 für das führende Fahrzeug kann dann ein Senden einer Information über die Übernahme der Kontrolle an ein Kontrollzentrum und ein Erhalten einer Bestätigung über die Kontrollübernahme von dem Kontrollzentrum umfassen. Das Verfahren 20 für das zu kontrollierende Fahrzeug kann entsprechend ein Erhalten einer Autorisierung von einem Kontrollzentrum über die Übernahme der Kontrolle vor dem Steuern 24 des zu kontrollierenden Fahrzeugs umfassen.

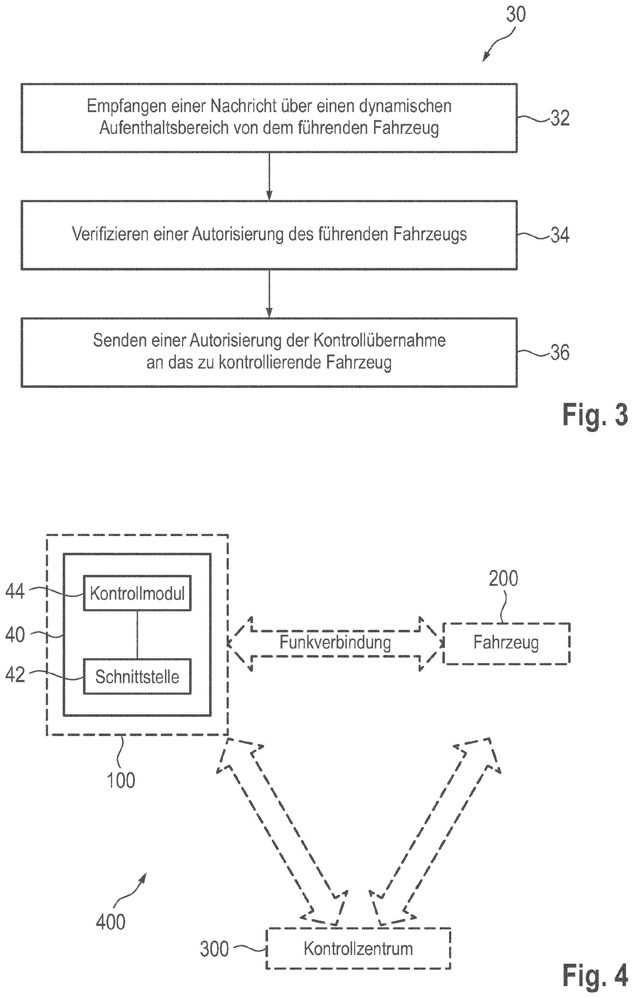

Fig. 3 zeigt ein Blockschaltbild eines Ablaufdiagramms eines Ausführungsbeispiels eines Verfahrens 30 für ein Kontrollzentrum zur Überwachung einer Kontrollübernahme eines zu kontrollierenden Fahrzeugs durch ein führendes Fahrzeug. Das Verfahren 30 umfasst ein Empfangen 32 einer Nachricht über einen dynamischen Aufenthaltsbereich von dem führenden Fahrzeug und ein Verifizieren 34 einer Autorisierung des führenden Fahrzeugs. Das Verfahren 30 umfasst ferner ein Senden 36 einer Autorisierung der Kontrollübernahme an das zu kontrollierende Fahrzeug. Das Verifizieren 34 der Autorisierung kann dabei durch gängige Methoden durch entsprechende Signaturen, Zertifikate oder Schlüsselpaare erfolgen, sodass sichergestellt ist, das führendes und kontrolliertes Fahrzeug autorisiert und identifiziert sind.

In einigen weiteren Ausführungsbeispielen kann darüber hinaus eine Dokumentation der Kontrollübernahme erfolgen. Das Verfahren 10 umfasst dann ein Dokumentieren der Kontrollübernahme in dem führenden Fahrzeug. Das Verfahren 20 kann ein Dokumentieren der Kontrollübernahme in dem zu kontrollierenden Fahrzeug umfassen. Schließlich kann das Verfahren 30 ein Dokumentieren der Kontrollübernahme durch das Kontrollzentrum umfassen. Dabei kann eine Nachvollziehbarkeit der Kontrollübernahme sichergestellt werden. Beispielsweise kann hierzu eine DLT (von engl. Distributed Ledger Technology), wie z.B. eine Blockchain, verwendet werden. Dabei können alle beteiligten Parteien (führendes Fahrzeug, kontrolliertes Fahrzeug und/oder Kontrollzentrum) den Vorgang digital verifizieren und bestätigen, sodass auch Manipulationen im Nachhinein ausgeschlossen werden.

In Ausführungsbeispielen kann das Steuern 24 des zu kontrollierenden Fahrzeugs zum Verbleib in dem dynamischen Aufenthaltsbereich relativ zu dem führenden Fahrzeug ferner basierend auf erhaltener Verkehrsinformation erfolgen. Eine besondere Verkehrssituation kann ein Steuern aus dem Aufenthaltsbereich heraus bedingen. In manchen Ausführungsbeispielen wird daher das kontrollierte Fahrzeug nur in einem gewissen Rahmen in den vorgegebenen Aufenthaltsbereich gezwungen, wobei der Rahmen Ausnahmen zulässt. Eine solche Ausnahme kann beispielsweise ein plötzlich auftretendes Verkehrsereignis sein, wie ein Unfall oder ein einscherendes Fahrzeug. Solche Information kann in Form von Nachrichten übermittelt werden, mittels Sensoren detektiert werden, oder auch von einem Fahrer des kontrollierten Fahrzeugs wahrgenommen werden.

In weiteren Ausführungsbeispielen kann das Verfahren 20 ferner ein Übernehmen der Kontrolle über ein dem zu kontrollierenden Fahrzeug nachfolgendes Fahrzeug umfassen. Es können in manchen Ausführungsbeispielen demnach Fahrzeugketten (Platoons oder Kolonnen) gebildet werden, wobei sich ein nachfolgendes Fahrzeug jeweils in einem dynamischen Aufenthaltsbereich eines voranfahrenden Fahrzeugs befindet. Dabei kann die Kontrolle von einem die Fahrzeugkette führenden Fahrzeug zentral übernommen werden oder auch verteilt organisiert werden, beispielsweise so, dass jeweils ein voranfahrendes Fahrzeug seinen Nachfolger kontrolliert.

Fig. 4 zeigt ein Blockschaltbild eines Ausführungsbeispiels eines Fahrzeuges 100 und eines Ausführungsbeispiels einer Vorrichtung 40 zur Koordination einer Übernahme einer Kontrolle eines zu kontrollierenden Fahrzeugs 200 durch ein führendes Fahrzeug 100. Die Vorrichtung 40 zur Koordination der Übernahme der Kontrolle des zu kontrollierenden Fahrzeugs 200 durch das führende Fahrzeug 100 umfasst zumindest eine Schnittstelle 42 zur Kommunikation, z.B. mit dem zu kontrollierenden Fahrzeug 200 oder auch mit einem Kontrollzentrum 300. Die Vorrichtung 40 umfasst ferner ein Kontrollmodul 44, das mit der zumindest einen Schnittstelle 42 gekoppelt ist und zu dessen Kontrolle ausgebildet ist. Das Kontrollmodul 44 ist ferner zur Durchführung eines der Verfahren 10, 20, und/oder 30 ausgebildet. In der Fig. 4 ist die Vorrichtung 40 in das führende Fahrzeug 100 zur Durchführung des Verfahrens 10 integriert, welches in gestrichelten Linien dargestellt ist, da es aus Sicht der Vorrichtung 40 optional ist. Das Fahrzeug 100 bildet daher ein weiteres Ausführungsbeispiel. Weitere Ausführungsbeispiele sind ein zu kontrollierendes Fahrzeug 200 mit einer Vorrichtung 40 zur Durchführung des Verfahrens 20 und ein Kontrollzentrum 300 mit einer Vorrichtung 40 zur Durchführung des Verfahrens 30.

Das führende Fahrzeug 100 und das zu kontrollierende Fahrzeug 200 sowie optional das Kontrollzentrum können dabei Teil eines Kommunikationssystems 400 sein, in dem über die jeweiligen Schnittstellen 42 kommuniziert wird.

Die zumindest eine Schnittstelle 42 der Vorrichtung 40 kann in Ausführungsbeispielen als Kontakte des Kontrollmoduls 44 ausgebildet sein. Sie kann in Ausführungsbeispielen auch als separate Hardware ausgeführt sein. Sie kann Speicher umfassen, die die zu sendenden beziehungsweise die empfangenen Signale zumindest vorübergehend speichern. Die zumindest eine Schnittstelle 42 kann zum Empfang von elektrischen Signalen ausgebildet sein, zum Beispiel als Busschnittstelle, oder als optische Schnittstelle. Sie kann darüber hinaus in Ausführungsbeispielen zur Funkübertragung ausgebildet sein und ein Radio-Frontend sowie zugehörige Antennen umfassen. Ferner kann die zumindest eine Schnittstelle 42, zum Beispiel für den CAN-Bus (CAN:=Controller Area Network), Synchronisationsmechanismen zur Synchronisierung mit dem jeweiligen Übertragungsmedium umfassen. In Ausführungsbeispielen kann die zumindest eine Schnittstelle 42 dazu ausgebildet sein, um im Fahrzeug und/oder anderen Fahrzeugen oder Instanzen beispielsweise über ein Netzwerk 400 zu kommunizieren.

Das Kontrollmodul 44 kann in Ausführungsbeispielen Hardware sein, die zur Durchführung eines der hierin beschriebenen Verfahren ausgebildet ist. Dies können beliebige Prozessorkerne, wie Digitale Signal-Prozessorkerne (DSPs) oder andere Prozessoren sein. Ausführungsbeispiele sind dabei nicht auf einen bestimmten Typ von Prozessorkern eingeschränkt. Es sind beliebige Prozessorkerne oder auch mehrere Prozessorkerne oder Mikrokontroller zur Implementierung des Kontrollmoduls 44 denkbar. Es sind auch Implementierungen in integrierter Form mit anderen Vorrichtungen denkbar, beispielsweise in einer Steuereinheit für ein Fahrzeug, die zusätzlich noch ein oder mehrere andere Funktionen umfasst. In Ausführungsbeispielen kann das Kontrollmodul durch einen Prozessorkern, einen Computerprozessorkern (CPU = Central Processing Unit), einen Grafikprozessorkern (GPU = Graphics Processing Unit), einen anwendungsspezifischen integrierten Schaltkreiskern (ASIC = Application-Specific Integrated Circuit), einen integrierten Schaltkreis (IC = Integrated Circuit), ein Ein-Chip-Systemkern (SOC = System on Chip), ein programmierbares Logikelement oder ein feldprogrammierbares Gatterarray mit einem Mikroprozessor (FPGA = Field Programmable Gate Array) als Kern des oben genannten Bausteins oder der Bausteine realisiert sein. Das Kontrollmodul kann demnach jedweder Komponente entsprechen, die aus dem Bewegungsprofil eine Verkehrsdichte berechnen oder bestimmen kann.

Zwischen Fahrzeugen 100, 200 oder zwischen Fahrzeugen und an Infrastrukturobjekten 300 stationär installierten Sendern kommunizierte Daten/Informationen können beispielsweise über Funk kommuniziert werden. Solche Informationen können als Fahrzeug-zu-Fahrzeug-Daten (englisch: vehicle-to-vehicle, V2V, data), beziehungsweise Fahrzeug-zu-Infrastruktur-Daten (englisch: vehicle-to-infrastructure, V2I, data) oder allgemein als Fahrzeug-zu-Allem-Daten (englisch: vehicle-to-everything, V2X, data) bezeichnet werden.

Die Vorrichtungen 40, das Kontrollzentrum 300 und die Fahrzeuge 100, 200 können über ein Mobilkommunikationssystem 400 kommunizieren. Das Mobilkommunikationssystem 400, wie es in Fig. 4 gezeigt ist, kann beispielsweise einem Mobilkommunikationssystem das durch 3GPP (3rd Generation Partnership Project) standardisiert wird oder wurde, wobei der Begriff Mobilkommunikationssystem synonym mit Mobilkommunikationsnetz verwendet wird. Die Nachrichten (Anfragen, Freigaben, Steuerinformationen, Informationen über den Aufenthaltsbereich) können daher über mehrere Netzwerkknoten (z. B. Internet, Router, Switches usw.) und das Mobilkommunikationssystem 400 übertragen werden.

Das mobile oder drahtlose Kommunikationssystem 400 kann einem mobilen Kommunikationssystem der 5. Generation (5G oder New Radio) entsprechen und kann die mm-Wave-Technologie verwenden. Das Mobilkommunikationssystem kann beispielsweise einem LTE ( Long Term Evolution) System, einem LTE-Advanced (LTE-A) System, einem Hochgeschwindigkeitspaketzugriff (HSPA High Speed Paket Access), einem Universal Mobile Telecommunication System (UMTS) oder einem UMTS Terrestrial Radio Access Network (UTRAN) entsprechen oder dieses umfassen, ein weiterentwickeltes UTRAN (e-UTRAN), ein globales System für mobile Kommunikation (GSM) oder erweiterte Datenraten für GSM Evolution (EDGE), ein GSM/EDGE Radio Access Network (GERAN) oder Mobilkommunikationsnetzwerke mit unterschiedlichen Standards, z. B. ein WIMAX-Netzwerk (Worldwide Interoperability for Microwave Access) IEEE 802.16 oder WLAN 802.11 (Wireless Local Area Network), im Allgemeinen ein OFDMA-Netzwerk (Orthogonal Frequency Division Multiple Access), a TDMA-Netzwerk (Time Division Multiple Access), CDMA-Netzwerk (Code Division Multiple Access), WCDMA-Netzwerk (Wideband-CDMA), FDMA-Netzwerk (Frequency Division Multiple Access), SDMA-Netzwerk (Spatial Division Multiple Access) usw.

In Ausführungsbeispielen kann beispielsweise über ein zum Fahrzeug gehörendes Kontroll- und Anweisungszentrum (Control & Command Center) die Steuerung entsprechend den Anweisungen Polizei o.ä. ausgeführt werden, z.B., um auf dem nächstem Parkplatz anzuhalten, auf dem Seitenstreifen anzuhalten, die nächste Ausfahrt zu nehmen, um zu "folgen", usw. Das kann voraussetzen, dass sowohl das Behördenfahrzeug 100 als auch das autonome Fahrzeug 200 Anbindung an ein Backend haben, beispielsweise über eine zellulare Verbindung 400.

Ist diese nicht vorhanden, können alternative Wege verwendet werden, um das Fahrzeug aus einem Bereich heraus oder in einen bestimmten Bereich hinein zu manövrieren, beispielsweise durch direkte Kommunikation. Auch wenn die Verbindung zum Backend vorhanden ist, kann ein Einsatzfahrzeug (z.B. Polizei) das Backend darüber informieren, dass das Einsatzfahrzeug die direkte Kontrolle über das zu kontrollierende Fahrzeug übernimmt. Eine Möglichkeit ist über Direktkommunikation. Dazu stehen diverse Technologien zur Verfügung. Z.B. ITS-G5 (Intelligent Transport System), C-V2X (Cellular V2X), 5G NR-V2X (5th Generation, New Radio), IEEE 802.11bd (Institute of Electrical and Electronics Engineers) und andere.

Vor einem Kommando (Kontrollübernahme) muss zumindest in manchen Ausführungsbeispielen eine sichere direkte Adressierbarkeit durch eine Authentifizierung und eine Autorisierung erfolgen. Auch dafür sind diverse Methoden bekannt. Zertifikate, Schlüsselverfahren etc.

Danach können Zielpositionen, maximale Geschwindigkeiten und Information über den dynamischen Aufenthaltsbereich übermittelt werden und das Fahrzeug fährt diese Position bzw. den Aufenthaltsbereich automatisch mit eigener Sensorik an. Wenn dazu nicht freigegebene Flächen überfahren werden müssen kann dies zu einem Dilemma führen. Deshalb wird die Trajektorie vom führenden Einsatzfahrzeug 100 an die Remote-Fahrzeuge 200 über den Aufenthaltsbereich vorgegeben, sodass diese mit gewissen Freiheitsgraden demselben Weg folgen. Die geführten Fahrzeuge 200 können dann auch zum Halt gebracht werden, durch eine Vorgabe des Aufenthaltsbereichs relativ zu dem führenden Fahrzeug, beispielsweise wenn dieses ebenfalls anhält.

Ein hoheitliches Fahrzeug mit Direktkommunikation kann dabei einen elektronischen Abschlepphaken zur Verfügung stellen und es kann die Rolle eines Scoutfahrzeugs übernehmen, das vorausfährt und damit einen befahrbaren Fahrschlauch/Korridor definieren (und eventuell freimachen, Gassenbildung) und freigeben. Je nach Situation kann ein Fahrzeug oder eine ganze Reihe von Fahrzeugen (Platoonbildung mit mehrfacher elektronischer Abschleppstange) aus Bereichen entfernt werden und so beispielsweise Stausituationen aufgelöst werden. Ein Vorteil kann hierbei sein, dass die Direktkommunikation überall funktioniert. Voraussetzung kann ein standardisiertes Kommunikationsverfahren auf standardisierten Frequenzen sein.

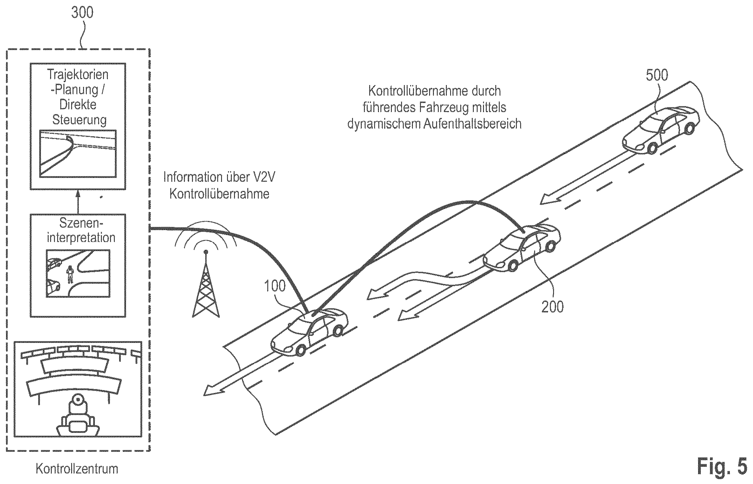

Fig. 5 zeigt ein Szenario einer Kontrollübernahme in einem Ausführungsbeispiel. In diesem Szenario übernimmt ein führendes Fahrzeug 100 die Kontrolle über ein zu kontrollierendes Fahrzeug 200. Dazu kommuniziert ein Kontrollzentrum 300 mit dem Fahrzeug 100 und autorisiert dieses zur Kontrollübernahme. Dies wird von dem führenden Fahrzeug 100 per V2V an das Fahrzeug 200 weiter kommuniziert. Dies kann in Ausführungsbeispielen auch von dem Kontrollzentrum 300 direkt an das Fahrzeug 200 kommuniziert werden. In dem gezeigten Ausführungsbeispiel sendet nun das Fahrzeug 100 eine Nachricht mit Information über den dynamischen Aufenthaltsbereich an das Fahrzeug 200. Der Aufenthaltsbereich ist dabei so definiert, dass das Fahrzeug 200 hinter dem Fahrzeug 100 bleibt und aber eine andere Spur verwenden kann. Fig. 5 zeigt einen Überholvorgang, bei dem das Fahrzeug 100 nach dem Überholen eines Fahrzeugs 500 wieder auf die rechte Spur gewechselt hat und das kontrollierte Fahrzeug 200 dem folgt, sich aber zunächst noch auf der linken Spur befindet.

Ausführungsbeispiele können darüber hinaus ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Funktionen verschiedener in den Figuren gezeigter Elemente sowie die bezeichneten Funktionsblöcke können in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungs-spezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht aus-tauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

### Bezugszeichenliste

- 10: Verfahren für ein führendes Fahrzeug und zur Übernahme der Kontrolle über ein zu kontrollierendes Fahrzeug
- 12: Identifizieren des zu kontrollierenden Fahrzeugs
- 14: Bestimmen eines dynamischen Aufenthaltsbereiches relativ zu dem führenden Fahrzeug für das zu kontrollierende Fahrzeug
- 16: Senden einer Nachricht über den dynamischen Aufenthaltsbereich an das zu kontrollierende Fahrzeug
- 20: Verfahren für ein zu kontrollierendes Fahrzeug und zur Übernahme einer Kontrolle durch ein führendes Fahrzeug
- 22: Empfangen einer Nachricht über einen dynamischen Aufenthaltsbereich von dem führenden Fahrzeug
- 24: Steuern des zu kontrollierenden Fahrzeugs zum Verbleib in dem dynamischen Aufenthaltsbereich relativ zu dem führenden Fahrzeug.
- 30: Verfahren für ein Kontrollzentrum zur Überwachung einer Kontrollübernahme eines zu kontrollierenden Fahrzeugs durch ein führendes Fahrzeug
- 32: Empfangen einer Nachricht über einen dynamischen Aufenthaltsbereich von dem führenden Fahrzeug
- 34: Verifizieren einer Autorisierung des führenden Fahrzeugs
- 36: Senden einer Autorisierung der Kontrollübernahme an das zu kontrollierende Fahrzeug
- 40: Vorrichtung zur Koordination einer Übernahme einer Kontrolle eines zu kontrollierenden Fahrzeugs durch ein führendes Fahrzeug
- 42: Zumindest eine Schnittstelle
- 44: Kontrollmodul
- 100: Fahrzeug
- 200: Fahrzeug
- 300: Fahrzeug
- 400: Kommunikationssystem
- 500: Fahrzeug

## Patentansprüche

1. Ein Verfahren (20) für ein zu kontrollierendes Fahrzeug (200) und zur Übernahme einer Kontrolle durch ein führendes Fahrzeug (100), mit
Empfangen (22) einer Nachricht über einen dynamischen Aufenthaltsbereich von dem führenden Fahrzeug (100), wobei der dynamische Aufenthaltsbereich so definiert ist, dass das zu kontrollierende Fahrzeug (200) hinter dem führenden Fahrzeug (100) bleibt und eine andere Spur verwenden kann; und
Steuern (24) des zu kontrollierenden Fahrzeugs (200) zum Verbleib in dem dynamischen Aufenthaltsbereich relativ zu dem führenden Fahrzeug (100);
wobei der dynamische Aufenthaltsbereich von der Geschwindigkeit des führenden Fahrzeugs (100) und einer Verkehrssituation abhängt,
wobei das Steuern des zu kontrollierenden Fahrzeugs (200) zum Verbleib in dem dynamischen Aufenthaltsbereich relativ zu dem führenden Fahrzeug (100) ferner basierend auf erhaltener Verkehrsinformation erfolgt,
wobei eine besondere Verkehrssituation ein Steuern aus dem Aufenthaltsbereich heraus bedingt,
wobei die besondere Verkehrssituation ein plötzlich auftretendes Verkehrsereignis umfasst, das einen Unfall oder ein einscherendes Fahrzeug umfasst, **dadurch gekennzeichnet, dass** das Verfahren ferner Dokumentieren der Kontrollübernahme in dem zu kontrollierenden Fahrzeug (200), in dem führenden Fahrzeug (100) und durch ein Kontrollzentrum umfasst,
wobei zur Nachvollziehbarkeit der Kontrollübernahme eine DLT, Distributed Ledger Technology, System verwendet wird,
wobei das führende Fahrzeug, das kontrollierte Fahrzeug und das Kontrollzentrum die Kontrollübernahme digital verifizieren und bestätigen,
wobei das führende Fahrzeug (100) ein Einsatzfahrzeug ist, und
wobei das Kontrollzentrum darüber informiert wird, dass das Einsatzfahrzeug die direkte Kontrolle über das zu kontrollierende Fahrzeug (200) übernimmt.

2. Verfahren (20) gemäß Anspruch 1, ferner umfassend Übernehmen der Kontrolle über ein dem zu kontrollierenden Fahrzeug (200) nachfolgendes Fahrzeug.

3. Verfahren (10) gemäß einem der Ansprüche 1 oder 2, wobei der dynamische Aufenthaltsbereich einen Korridor hinter dem führenden Fahrzeug (100) für das zu kontrollierende Fahrzeug (200) umfasst.

4. Computerprogramm mit einem Programmcode zum Durchführen eines der Verfahren (10; 20; 30) gemäß einem der Ansprüche 1 bis 3, wenn der Programmcode auf einem Computer, einem Prozessor, einem Kontrollmodul oder einer programmierbaren Hardwarekomponente ausgeführt wird.

5. Eine Vorrichtung (40) zur Koordination einer Übernahme einer Kontrolle eines zu kontrollierenden Fahrzeugs (200) durch ein führendes Fahrzeug (100), mit zumindest einer Schnittstelle (42) zur Kommunikation; und
einem Kontrollmodul (44) zur Durchführung eines der Verfahren (10; 20; 30) gemäß einem der Ansprüche 1 bis 3.

6. Ein Fahrzeug (100; 200; 300) mit einer Vorrichtung (40) gemäß Anspruch 5.

## Claims

1. Method (20) for a vehicle (200) to be controlled and for assuming control by a leading vehicle (100), comprising
receiving (22) a message about a dynamic holding region from the leading vehicle (100), the dynamic holding region being defined such that the vehicle (200) to be controlled remains behind the leading vehicle (100) and can use a different lane; and
steering (24) the vehicle (200) to be controlled to remain in the dynamic holding region relative to the leading vehicle (100);
the dynamic holding region depending on the speed of the leading vehicle (100) and a traffic situation,
steering the vehicle (200) to be controlled to remain in the dynamic holding region relative to the leading vehicle (100) further being based on obtained traffic information,
a particular traffic situation requiring steering out of the holding region,
the particular traffic situation comprising a sudden traffic event which comprises an accident or a vehicle cutting in,
**characterized in that** the method further comprises documenting, in the leading vehicle (100) and by a control center, the assumption of control in the vehicle (200) to be controlled,
a DLT, Distributed Ledger Technology, system being used to trace the assumption of control,
the leading vehicle, the controlled vehicle and the control center digitally verifying and confirming the assumption of control,
the leading vehicle (100) being an emergency vehicle, and
the control center being notified that the emergency vehicle assumes direct control of the vehicle (200) to be controlled.

2. Method (20) according to claim 1, further comprising assuming control of a vehicle following the vehicle (200) to be controlled.

3. Method (10) according to either claim 1 or 2, wherein the dynamic holding region comprises a corridor behind the leading vehicle (100) for the vehicle (200) to be controlled.

4. Computer program comprising a program code for carrying out one of the methods (10; 20; 30) according to any of claims 1 to 3 when the program code is executed on a computer, a processor, a control module, or a programmable hardware component.

5. Device (40) for coordinating assumption of control of a vehicle (200) to be controlled by a leading vehicle (100), said device comprising at least one interface (42) for communication; and a control module (44) for carrying out one of the methods (10; 20; 30) according to any of claims 1 to 3.

6. Vehicle (100; 200; 300) comprising a device (40) according to claim 5.

## Revendications

1. Procédé (20) pour un véhicule à contrôler (200) et destiné à la prise de contrôle par un véhicule de tête (100), comportant
la réception (22) d'un message concernant une zone d'arrêt dynamique en provenance du véhicule de tête (100), dans lequel la zone d'arrêt dynamique est définie de telle sorte que le véhicule à contrôler (200) reste derrière le véhicule de tête (100) et peut utiliser une autre voie ; et
la commande (24) du véhicule à contrôler (200) pour rester dans la zone d'arrêt dynamique par rapport au véhicule de tête (100) ;
dans lequel la zone d'arrêt dynamique dépend de la vitesse du véhicule de tête (100) et d'une situation de circulation,
dans lequel la commande du véhicule à contrôler (200) pour qu'il reste dans la zone d'arrêt dynamique par rapport au véhicule de tête (100) est en outre basée sur des informations de circulation obtenues,
dans lequel une situation de circulation particulière nécessite une commande hors de la zone d'arrêt,
dans lequel la situation de circulation particulière comprend un événement de circulation survenant soudainement, qui comprend un accident ou un véhicule qui se rabat,
**caractérisé en ce que** le procédé comprend en outre la documentation de la prise de contrôle dans le véhicule à contrôler (200), dans le véhicule de tête (100) et par un centre de contrôle,
dans lequel un système de dispositif d'enregistrement électronique partagé DLT (Distributed Ledger Technology), est utilisé pour assurer la traçabilité de la prise de contrôle,
dans lequel le véhicule de tête, le véhicule contrôlé et le centre de contrôle vérifient et confirment numériquement la prise de contrôle,
dans lequel le véhicule de tête (100) est un véhicule d'intervention, et dans lequel le centre de contrôle est informé que le véhicule d'intervention prend le contrôle direct du véhicule à contrôler (200).

2. Procédé (20) selon la revendication 1, comprenant en outre la prise de contrôle d'un véhicule qui suit le véhicule à contrôler (200).

3. Procédé (10) selon l'une des revendications 1 ou 2, dans lequel la zone d'arrêt dynamique comprend un couloir derrière le véhicule de tête (100) pour le véhicule à contrôler (200).

4. Programme d'ordinateur comportant un code de programme permettant de mettre en œuvre l'un des procédés (10 ; 20 ; 30) selon l'une des revendications 1 à 3, lorsque le code de programme est exécuté sur un ordinateur, un processeur, un module de contrôle ou un composant matériel programmable.

5. Dispositif (40) permettant de coordonner une prise de contrôle d'un véhicule à contrôler (200) par un véhicule de tête (100), comportant au moins une interface (42) de communication ; et un module de contrôle (44) pour mettre en œuvre l'un des procédés (10 ; 20 ; 30) selon l'une des revendications 1 à 3.

6. Véhicule (100 ; 200 ; 300) comportant un dispositif (40) selon la revendication 5.
